# EUROPÄISCHE PATENTSCHRIFT

(11) **EP 1 253 050 B1**
(45) Veröffentlichungstag und Bekanntmachung des Hinweises auf die Patenterteilung: **20.08.2008**
(21) Anmeldenummer: 02006968.8
(22) Anmeldetag: 27.03.2002
(51) Int. Cl.: B60R 21/01

(54) **Verfahren zur Auslösung eines Insassenschutzsystems in Fahrzeugen**
Method for deploying an occupant protection system in vehicles
Procédé pour le déclenchement d'un système de protection des occupants d'un véhicule

(30) Priorität: 06.04.2001 DE 10117219
(43) Veröffentlichungstag der Anmeldung: 30.10.2002
(73) Patentinhaber: Conti Temic microelectronic GmbH, 90411 Nürnberg (DE)
(72) Erfinder: Fendt, Günter, 86529 Schrobenhausen (DE)

(56) Entgegenhaltungen:
- WO-A-02/20314
- DE-A- 10 010 633
- US-A- 5 014 810

## Beschreibung

Die Erfindung betrifft ein Verfahren zur Auslösung von Insassenschutzsystemen in Fahrzeugen nach dem Oberbegriff des Patentanspruchs 1.

Bei bekannten Verfahren wird zur Auslösung eines Insassenschutzsystems ein von Sensoren ausgehendes Freigabesignal generiert und mit einem als Auslösekriterium benutzten Schwellwert (Auslöseschwelle) verglichen. In der Regel liegt diese Auslöseschwelle sehr niedrig, um auch bei einem Crashvorgang mit niedriger Geschwindigkeit das Insassenschutzsystem zuverlässig auszulösen. Bei außergewöhnlichen Fahrsituationen (Fahren über Bordstein, über Bodenwellen oder über Hindernisse auf der Fahrbahn) ist jedoch eine niedrige Auslöseschwelle nachteilig, da die Gefahr einer Fehlauslösung und dadurch die Gefährdung der Fahrzeuginsassen steigt.

Aus der gattungsgemäßen europäischen Patentschrift EP 0 458 796 B2 ist bekannt, ein als Auslösekriterium benutzter Schwellwert in Abhängigkeit von einer oder mehreren vom Crashvorgang abgeleiteten Zustandsgrößen des Fahrzeugs zu verändern und zum Zeitpunkt eines Aufpralls beispielsweise die Auslöseschwelle anzuheben, um eine Gefährdung der Fahrzeuginsassen durch eine Fehlauslösungen des Insassenschutzsystems auszuschließen. Bei diesem Auslöseverfahren besteht das Risiko, dass die Systeme, die die benötigten Daten oder Signale zur Anpassung der Auslöseschwelle liefern sollen, oder das Übertragungsmedium, zum Beispiel der Kabelbaum, durch den Crashvorgang gestört oder sogar zerstört sind. Ebenfalls kann das für den Datenbus notwendige Übertragungsprotokoll auf Grund von Spannungsspitzen oder Kurzschlüssen infolge eines Aufpralls fehlerhafte Werte liefern.

Aus der deutschen Offenlegungsschrift DE 39 42 011 A1 ist eine Einrichtung zur Auslösung einer passiven Sicherheitseinrichtung für Fahrzeuginsassen bekannt, bei der zusätzlich zur Geschwindigkeit in einem zweiten Auswertekanal ein kritischer Weg (Vorverlagerung der Fahrzeuginsassen) als Auslösekriterium dient, um einen Unfall, der eine große Vorverlagerung der Fahrzeuginsassen bewirkt, von Störsignalen, wie sie von Bodenwellen, Schlaglöchern oder Bordsteinkanten erzeugt werden, unterscheiden zu können. Dieser zweite Auslösekanal führt jedoch zu einem mehr als doppelt so großen Schaltungs- bzw. Rechenaufwand in der Steuereinheit für das Insassenschutzsystem.

Zudem ist noch aus der deutschen Offenlegungsschrift DE 37 37 554 A1 bekannt, die Informationen, die in einem Anti-Blockiersystem vorliegen, über dessen Prozessor zur Auslösung der Insassenschutzsysteme heran zu ziehen.

Der Erfindung liegt die Aufgabe zugrunde, ein Verfahren zur Auslösung eines Insassenschutzsystems in Fahrzeugen nach dem Oberbegriff des Anspruchs 1 so zu gestalten, dass eine die Fahrzeuginsassen gefährdende Fehlauslösung zuverlässig vermieden wird und dennoch im Crashfall eine sichere Auslösung gewährleistet ist.

Gelöst wird diese Aufgabe durch ein Verfahren mit den im Anspruch 1 angegebenen Merkmalen.

Das Verfahren nach Anspruch 1 weist die Vorteile auf, dass die zur Erhöhung bzw. Anpassung der Auslöseschwelle notwendigen Informationen sicher erfasst und übertragen werden können, da Sensoren, Übertragungswege und Auswerteelektronik voll funktionsfähig sind. Ein weiterer Vorteil liegt darin, dass der Prozessor, der den Auslösealgorithmus bearbeitet, diese zusätzlichen Informationen nicht erst bei einem Crash mitverarbeiten muss, sondern bereits zu einem früheren Zeitpunkt mit noch nicht zeitkritischen Abläufen bearbeiten kann. Somit muss im Crashfall eine Auslöseschwelle auf Basis der zusätzlichen Informationen nicht erst berechnet werden, sondern man kann auf eine zuvor der Situation angepasste Einstellung zurückgreifen.

Die Erfindung eignet sich insbesondere für einen Algorithmus zur Auslösung eines Insassenschutzsystems in Fahrzeugen, um Fehlauslösungen beim Überfahren von Bordsteinen, Bodenwellen, Schlaglöchern oder Hindernissen auf der Fahrbahn zu verhindern.

Vorteilhafte Ausgestaltungen des Verfahrens nach Anspruch 1 sind in den Unteransprüchen angegeben.

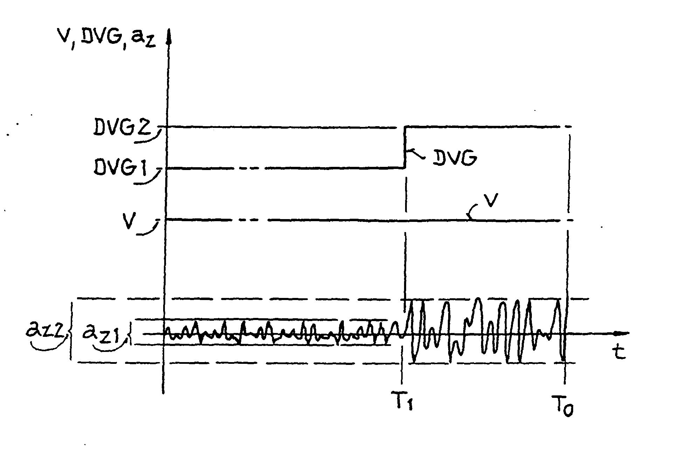

Die Erfindung wird nun anhand eines Ausführungsbeispiels unter Zuhilfenahme der Zeichnung erläutert.

Die einzige Figur zeigt in einem Diagramm den Zusammenhang zwischen einer Änderung der Beschleunigung in Z-Richtung und der Anpassung der Auslöseschwelle.

Die **Fig.** zeigt in einem Diagramm die Geschwindigkeit V eines Fahrzeugs, die Beschleunigung **a_{z}** in Richtung der Hochachse (Z-Achse) und die Geschwindigkeitsänderung DV über der Zeit t, weiterhin eine erste Kurve **V**, die die Geschwindigkeit eines Fahrzeugs darstellt, eine zweite Kurve **DVG**, die die als Auslösekriterium benutzen Grundschwelle (G) für die Geschwindigkeitsänderung (DV) darstellt und eine dritte Kurve **a_{z}**, die die Beschleunigung des Fahrzeugs in Richtung seiner Hochachse (Z-Achse) darstellt.

Ein Fahrzeug weist über einen Zeitraum bis zu einem Zeitpunkt **T₀** eine annähernd konstante Geschwindigkeit **V₁** auf. Die Grundschwelle der Geschwindigkeitsänderung **DVG** ist auf einen vergleichsweise hohen Wert **DVG1** eingestellt, um ein unbeabsichtigtes Auslösen des Insassenschutzsystems, etwa beim starken Abbremsen des Fahrzeugs, zu verhindern. Die zugehörige Kurve **DVG** verläuft parallel zur Kurve der Geschwindigkeit **V₁** und ebenfalls bis zum Zeitpunkt **T₁** annähernd konstant. Bis zum Zeitpunkt **T₁** weist die Amplitude der Beschleunigung in Z-Richtung **a_{z}** einen Wert **a_{z1}** auf, wobei die Beschleunigung in Z-Richtung **a_{z}** vorteilhaft mittels eines Beschleunigungssensors gemessen wird.

Ab dem Zeitpunkt **T₁** vergrößert sich, trotz gleichbleibender Geschwindigkeit **V₁**, die Amplitude der Beschleunigung in Z-Richtung **a_{z}** auf einen Wert **a_{z2}**, weil beispielsweise auf Kopfsteinpflaster oder über Hindernisse auf der Fahrbahn gefahren wird oder weil die Fahrbahn Bodenwellen oder Schlaglöcher aufweist. Durch die größere Amplitude **a_{z2}** steigt die Gefahr, dass bei gleichbleibender DV-Grundschwelle **DVG** beispielsweise in Folge eines Bremsvorgangs das Insassenschutzsystem unbeabsichtigt ausgelöst wird.

Um derartige Fehlauslösungen des Insassenschutzsystems und damit eine Gefährdung der Fahrzeuginsassen auszuschließen, wird erfindungsgemäß bei stärkerer Beschleunigung in Z-Richtung **a_{z}** mit der vergrößerten Amplitude **a_{z2}** zum Zeitpunkt **T₁** die DV-Grundschwelle **DVG** auf einen etwas höheren Wert **DVG2** angehoben. Trotz des geringfügig höheren Wertes **DVG2** für die DV-Grundschwelle wird das Insassenschutzsystem zuverlässig ausgelöst, falls es zum Zeitpunkt **T₀** zu einem Crashvorgang kommen sollte. Verringert sich die Beschleunigung in in Z-Richtung **a_{z}**, so wird die als Auslösekriterium benutzte DV-Grundschwelle **DVG** wieder auf einen niedrigeren Wert abgesenkt.

Die erfindungsgemäße Anpassung der als Auslösekriterium benutzten DV-Grundschwelle **DVG** an die Beschleunigung in in Z-Richtung **a_{z}** eignet sich insbesondere für einen Algorithmus zur Auslösung eines Insassenschutzsystems in Fahrzeugen, um Fehlauslösungen bei hohen Beschleunigungsamplituden beispielsweise in Folge einer Schlechtwegstrecke zu verhindern.

## Patentansprüche

1. Verfahren zur Auslösung eines Insassenschutzsystems in Fahrzeugen, bei welchem ein von Sensoren ausgehendes Freigabesignal für die Auslösung des Insassenschutzsystems generiert und mit einem als Auslösekriterium benutzten Schwellwert (DVG) verglichen wird, **dadurch gekennzeichnet, dass** der Schwellwert (DVG) fortlaufend und in Abhängigkeit der Beschleunigung (**a_{z}**) in Richtung der Hochachse des Fahrzeugs verändert bzw. angepasst wird.

2. Verfahren nach Anspruch 1, **dadurch gekennzeichnet, dass** bei einer größer werdenden Amplitude der Beschleunigung (a_{z}) in Richtung der Hochachse des Fahrzeugs der als Auslösekriterium benutzte Schwellwert (DVG) erhöht wird.

3. Verfahren nach Anspruch 1 oder 2, **dadurch gekennzeichnet, dass** bei einer kleiner werdenden Amplitude der Beschleunigung (a_{z}) in Richtung der Hochachse des Fahrzeugs der als Auslösekriterium benutzte Schwellwert (DVG) erniedrigt wird.

4. Verfahren nach einem der Ansprüche 1 bis 3, **dadurch gekennzeichnet, dass** Beschleunigung (a_{z}) in Richtung der Hochachse des Fahrzeugs mittels eines Beschleunigungssensors gemessen wird.

## Claims

1. A method for triggering a passenger protection system in motor vehicles, in which a release signal issued by sensors is generated for triggering the passenger protection system, and is compared with a threshold value (DVG) which is used as a triggering criterion, **characterized in that** the threshold value (DVG) is continuously modified or adapted in relation to the acceleration (a_{z}) in the direction of the vertical axis of the motor vehicle.

2. A method according to claim 1, **characterized in that** with an increasing amplitude of the acceleration (a_{z}) in the direction of the vertical axis of the motor vehicle, the threshold value (DVG) used as a triggering criterion is raised.

3. A method according to either of claims 1 or 2, **characterized in that** with a decreasing amplitude of the acceleration (a_{z}) in the direction of the vertical axis of the motor vehicle, the threshold value (DVG) used as a triggering criterion is lowered.

4. A method according to any one of claims 1 to 3, **characterized in that** the acceleration (a_{z}) in the direction of the vertical axis of the motor vehicle is measured by means of an acceleration sensor.

## Revendications

1. Procédé pour le déclenchement d'un système de protection des occupants dans des véhicules, sur lequel un signal de libération provenant de capteurs est généré pour le déclenchement du système de protection des occupants et comparé avec une valeur de seuil (DVG) utilisée comme critère de déclenchement, **caractérisé en ce que** la valeur de seuil (DVG) est modifiée ou ajustée continuellement et en fonction de l'accélération (a_{z}) dans le sens de l'axe vertical du véhicule.

2. Procédé selon la revendication 1, **caractérisé en ce que**, pour une amplitude d'accélération (a_{z}) croissante dans le sens de l'axe vertical du véhicule, la valeur de seuil (DVG) utilisée comme critère de déclenchement est augmentée.

3. Procédé selon la revendication 1 ou 2, **caractérisé en ce que**, pour une amplitude d'accélération (a_{z}) décroissante dans le sens de l'axe vertical du véhicule, la valeur de seuil (DVG) utilisée comme critère de déclenchement est diminuée.

4. Procédé selon l'une des revendications 1 à 3, **caractérisé en ce que** l'accélération (a_{z}) dans le sens de l'axe vertical du véhicule est mesurée au moyen d'un capteur d'accélération.
